# EUROPEAN PATENT APPLICATION

(11) **EP 2 246 732 A1**
(43) Date of publication of application: **03.11.2010**
(21) Application number: 09173258.6
(22) Date of filing: 16.10.2009
(51) Int. Cl.: G02F 1/1333, B32B 27/12, B32B 27/04

(54) **Flexible substrate for display panel and manufacturing method thereof**

(30) Priority: 28.04.2009 KR 20090036933
(71) Applicant: Samsung Corning Precision Materials Co., Ltd., Gumi-si Gyeongsangbuk-do 730-360 (KR)
(72) Inventor: Lee, KiYeon, Asansi, 336-841, Chungcheongnam-do (KR); Jung, KyeongTeak, Asansi, 336-841, Chungcheongnam-do (KR); Lee, KyuDong, Asansi, 336-841, Chungcheongnam-do (KR)
(74) Representative: Bungartz, Klaus Peter

(57) **Abstract**

The present invention generally relates to a flexible substrate for a display panel and a manufacturing method thereof, and more specifically, to a flexible substrate for a display panel which is transparent and thin and has low coefficients of thermal expansion and excellent flexibility, heat resistance, and surface roughness.

The flexible substrate for the display panel in accordance with the present invention comprises a film complex structure, comprising: first films where a glass cloth is impregnated inside first heat-resistant resins (110); intermediate materials(120) applied to at least one side of the first films as resins having high transmittance or same as the heat-resistant resins of the first films; and second films laminated on the intermediate materials (120) as films previously manufactured with second heat-resistant resins.

## Description

### Technical Field

### Field of the Invention

The present invention generally relates to a flexible substrate for display panel and manufacturing method thereof, and more specifically, to a flexible substrate for a display panel which is transparent and thin and has low coefficients of thermal expansion and excellent flexibility, heat resistance, and surface roughness, by laminating second films on first films including a glass cloth.

### Background Art

Display devices (ex, liquid crystal display devices) widely supplied at the moment are using transparent electrode substrates made of glass materials. Glass substrates, however, have restrictions on flatness and lightness of liquid crystal display devices because they are thick and heavy. Furthermore, they are vulnerable to impact, and particularly, the glass substrates are not suitable for flexible displays owing to their brittleness of glass materials.

Accordingly, flexible substrates made of plastic optical film materials are in the limelight as materials that can replace the existing glass substrates. The flexible substrates have a characteristic that is very proper for advanced display devices such as organic EL, e-paper, and others as well as liquid crystal displays.

The flexible substrates formed with the plastic optical film materials are thin and light compared to the existing glass substrates used as display panels, and have flexible properties and can be processed in various types. Hence, it is possible to realize lightness, flatness, surface display functions, and others which are mainly required by the advanced display devices.

Thanks to the aforementioned advantages of the flexible substrates, a lot of research and development is being made for the flexible substrates' materials, structures, and so on.

Specifically, in an early stage of development, flexible substrates, which have adopted transparent film materials simply consisting of plastic high molecules, were used. Then, compositions using an epoxy resin, acid anhydride-series hardener, and alcohol hardening catalyst were applied as materials for flexible substrates.

However, the flexible substrates made of the above materials had problems of large linear coefficients of expansion, and particularly, when the flexible substrates formed with the above materials were used as active matrix display device substrates; problems such as bending during a manufacturing process and disconnection of aluminium wires were produced. Also, compared to glass, the above materials have vulnerable optical properties such as CTE(Coefficient of Thermal Expansion), thermal characteristics, and transparency or refractive index. Thus, there is a limit when they are used as flexible substrates.

Therefore, to use the plastic optical film materials as substrates for display panels, particularly, substrates for liquid crystal display devices; it is definitely needed to develop plastic optical film materials having good heat resistance, high transmittance, and low coefficients of thermal expansion and surface roughness.

As for a prior art for reducing coefficients of thermal expansion of the plastic optical film materials in accordance with such a need, it regards a complex film structure configured by mixing an inorganic filler such as glass powder or a glass cloth with resins. For instance, Japan Publicized Patent No. 2004-51960 discloses a resin sheet including an epoxy resin and glass fabric-type glass textile material, and Japan Publicized Patent No. 2004-233851 describes a transparent substrate made of a glass cloth and resins.

But, a prior film structure and a manufacturing method thereof for manufacturing a transparent substrate by impregnating a glass cloth into resins had the following problems:

First, a process of manufacturing glass fibre in fabric type was not simple, and particularly, if films are made into a large size by using a hot process technique and others, film curling may occur and a process would take a long time and be complicated, resulting in an increase of a production cost; and

Second, when films into which a glass cloth is impregnated are manufactured by using UV hardening resins, surface roughness of completed films is not flat and very rough to cause deterioration of picture quality of a display device, due to contraction of the glass cloth and a structural characteristic of the glass fibre configured in fabric type.

### Disclosure of Invention

### SUMMARY OF THE INVENTION

To solve such problems, it is therefore an object of the present invention to provide a flexible substrate which can ensure an optimal picture quality of a display device by improving a surface roughness problem of a substrate.

It is another object of the present invention to provide a flexible substrate which can minimize a change of a phase difference of pattern cells in accordance with contraction and expansion of a substrate during a high-temperature process, by obtaining low coefficients of thermal expansion while at the same time, improving surface roughness of the substrate.

It is another object of the present invention to provide a flexible substrate which can realize scale-up of a substrate through a simple process, as minimizing a curl problem of films occurring when the substrate was made into a large size in the prior art.

The above object of the present invention can be accomplished by a flexible substrate for a display panel comprising a film complex structure, comprising: first films where a glass cloth is impregnated inside first heat-resistant resins; and second films laminated on at least one side of the first films and composed of second heat-resistant resins.

Another object of the present invention can be accomplished by a method for manufacturing a flexible substrate for a display panel, comprising the steps of: a first step of manufacturing a glass cloth by configuring glass fibre in fabric type, and manufacturing first films by impregnating the glass cloth into first heat-resistant resins; and a second step of previously manufacturing second films configured by hardening second heat-resistant resins, and laminating and combining the previously manufactured second films on an upper part of at least one side of the first films.

According to a flexible substrate for a display panel and a manufacturing method thereof in accordance with the present invention, it is possible to obtain surface roughness improvement by second films while at the same time, ensuring reduction in coefficients of thermal expansion by first films through organic combination between the first films and the second films, thereby realizing a remarkable effect of improving size stability and surface roughness of a display panel substrate.

In addition, through a film complex structure that solidified second films are adhered or stuck to first films, it can prevent curl generation caused by contraction and expansion of a substrate, thus scale-up is easy and a manufacturing process is simplified, resulting in improvement of productivity.

Moreover, when second films for improving surface roughness is manufactured, if heat-resistant transparent resins having no double refraction are used as resins that constitute the second films, it is unnecessary to consider matching of refractive indexes with first films. As a result, types of applicable resins can be diversified, thereby cutting down a manufacturing cost.

### Brief Description of Figures in the Drawings

The advantages of the invention will become readily apparent to those skilled in the art from the following detailed description of a preferred embodiment when considered in the light of the accompanying drawings, in which:

Fig. 1(a) to (c) are diagrams for illustrating a manufacturing process of a flexible substrate for a display panel in accordance with the present invention;

Fig. 2 is a sectional view of a flexible substrate finally completed through the manufacturing process of Fig. 1;

Fig. 3 is a block flowchart showing an operational sequence of a method for manufacturing a flexible substrate for a display panel in accordance with the present invention; and

Fig. 4 is a sectional view of a flexible substrate of another embodiment in accordance with the present invention.

### Best Mode for Carrying Out the Invention

### DETAILED DESCRIPTION OF PREFERRED EMBODIMENTS

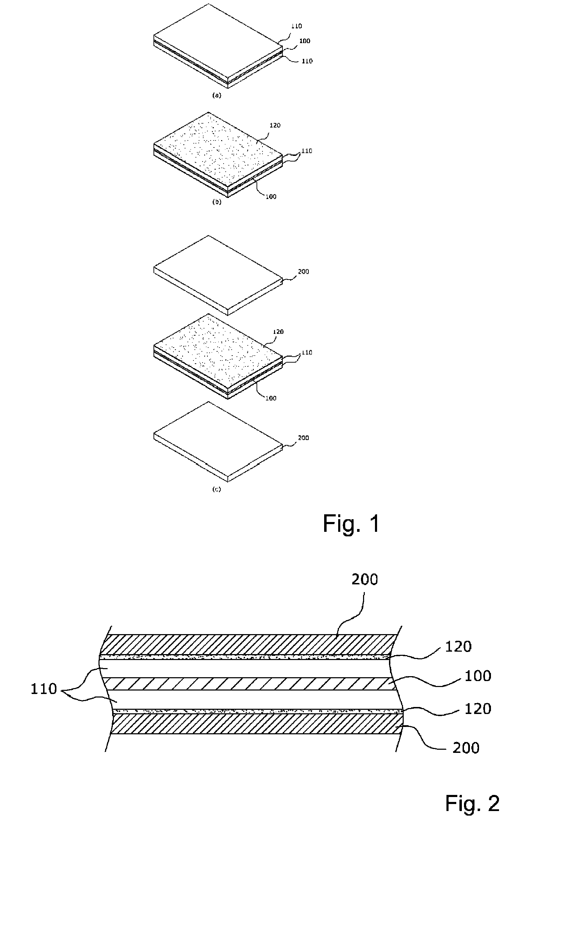

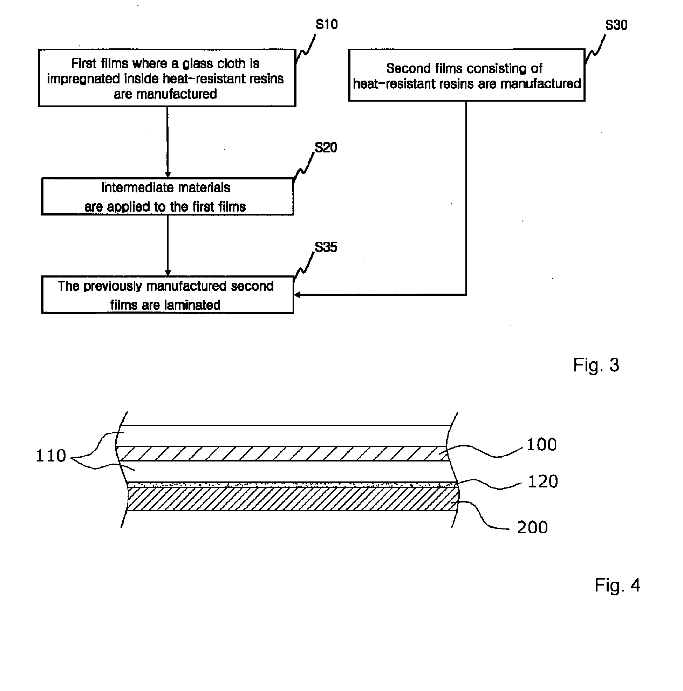

Fig. 1(a) to (c) are diagrams for illustrating a manufacturing process of a flexible substrate for a display panel in accordance with the present invention, Fig. 2 is a sectional view of a flexible substrate finally completed through the manufacturing process of Fig. 1, and Fig. 3 is a block flowchart showing an operational sequence of a method for manufacturing a flexible substrate for a display panel in accordance with the present invention.

Before explanation, it is noted that preferred embodiments to be described from now on regard the best flexible substrate and a manufacturing method for a panel that requires a transparent substrate such as a liquid crystal display device among various display devices including liquid crystal display devices, organic EL, and e-paper.

That is to say, a flexible substrate in accordance with the present invention can obtain an optical property like "more than 85% of transmittance" and a thermal property like "less than 20ppm of coefficients of thermal expansion", and particularly it is possible to prevent contrast deterioration caused by surface roughness of a substrate when a liquid crystal display device panel is manufactured, by improving the surface roughness of the substrate, and to suggest a technical feature for easy scale-up.

So, in case the flexible substrate of the present invention would be applied to a display panel (ex, organic EL, e-paper, solar cell, optical circuit board, etc.) that does not have to consider transmittance of a substrate, it is definitely possible to collect and apply only a configuration for improving a thermal property and surface roughness, without considering a technical feature which influences transmittance of the flexible substrate of the present invention.

Hereinafter, features, embodiments, and advantages of the flexible substrate in accordance with the present invention will be fully described in reference to Fig. 1 to Fig. 3.

A flexible substrate for a display panel in accordance with the present invention suggests a film complex structure including first films where a glass cloth (100) is impregnated inside first heat-resistant resins (110), and second films laminated on at least one side of the first films and consisting of second heat-resistant resins.

As a physical property of the flexible substrate is improved through the film complex structure of the present invention, restrictions on reduction in coefficients of thermal expansion of a prior plastic substrate can be overcome, and above all, it is possible to remove a problem that contrast is deteriorated owing to surface roughness of a resin sheet including a prior glass cloth.

In detail, the flexible substrate in accordance with the present invention is manufactured through a step of manufacturing first films including a glass cloth (100) inside first heat-resistant resins(110), a step of applying intermediate materials(120) made of resins identical to the heat-resistant resins(110) of the first films or resins that obtain transparency and heat resistance, on both outer sides of the manufactured first films, and a step of laminating second films (200) previously manufactured with second heat-resistant resins on the intermediate materials(120).

### (1) Step of manufacturing the first films

The first films in accordance with the present invention is completed by configuring glass fibre in fabric type to manufacture the glass cloth (100), and by hardening liquid first heat-resistant resins after retting the manufactured glass cloth (100) in the liquid first heat-resistant resins.

Hence, the first films formulate a resin sheet structure where the glass cloth (100) is included as being impregnated inside the hardened first heat-resistant resins(110), and the glass cloth (100) included inside the first heat-resistant resins(110) can reduce substrate transformation occurring during a panel process, by offsetting high coefficients of thermal expansion that the second heat-resistant resins themselves have, owing to low coefficients of thermal expansion that a glass material has.

UV hardening or thermal hardening resins are used as the first heat-resistant resins (110) that constitute the first films of the present invention, and more specifically, it is desirable to use at least one resin selected from heat-resistant resins having more than 200°C of glass transition temperature such as polysulfone, polyether, polyether imide, and polyarylate(PAR), but it is not necessarily limited to these resins.

It is because, when the flexible substrate in accordance with the present invention is applied to a liquid crystal display device process at more than 180°C, substrate transformation caused by high coefficients of thermal expansion that resins have by themselves should be minimized to obtain size stability.

Likewise, to apply the flexible substrate in accordance with the present invention to a display panel that needs a transparent substrate like a liquid crystal display device, optical properties such as refractive indexes and transmittance should be considered as well as low coefficients of thermal expansion.

In the case of a liquid crystal display device panel, it has a structure that light selectively transmitted by a liquid crystal arrives a user after passing through the flexible substrate. Since the first films which constitute the flexible substrate in accordance with the present invention have a structure that the glass cloth (100) is impregnated inside a resin sheet, a difference of refractive indexes between the first heat-resistant resins(110) and the glass cloth (100) should be minimized to display a clear image.

Thus, a refractive index of the glass cloth (100) which formulates the first films should be matched with that of the first heat-resistant resins (110). In detail, it is desirable to configure the glass cloth (100), which formulates the first films, by using a glass fibre material having a refractive index difference within ±0.01 with the first heat-resistant resins (110).

UV hardening resins having 1.556 refractive indexes were employed as the first films in accordance with a preferred embodiment of the present invention, and the glass cloth (100) was formulated by using glass fibre having 1.55 refractive indexes.

Furthermore, it is suitable for thickness of the flexible substrate in accordance with the present invention to be 30∼200µm in order to provide a sufficient flexible function when being applied to a display device, and desirably, it is better to be configured in 50∼100µm.

Also, it is desirable to configure the second films (200) of the present invention in a thinner way than the first films. It is because, when thickness of the second films (200) exceeds that of the first films, reduction in thermal expansion by the first films might be offset by the second films (200), resulting in an increase of coefficients of thermal expansion again, and thereby causing deterioration of size stability of the flexible substrate.

In consideration of the aforementioned facts, it is desirable to configure the first films in accordance with the preferred embodiment of the present invention to have a thickness of 20∼90µm, the second films (200) laminated and combined on the first films to have a thickness of 10∼50µm, and the intermediate materials (120) applied between the first films and the second films (200) to be in a thickness of 0.5∼5µm.

Namely, the flexible substrate in accordance with the present invention has a technical feature of obtaining even surface roughness improvement effect by the second films as ensuring reduction in coefficients of thermal expansion by the first films, through organic combination between the first films configured in 20∼90µm of thickness and the second films configured in 10∼50µm of thickness.

### (2) Step of applying the intermediate materials

When the first films are completely manufactured, the intermediate materials (120) are applied to both outer sides of the first films. The intermediate materials (120) are configured to laminate and combine the second films (200) on the first films, and UV hardening or thermal hardening resins like the first films are employed.

Specifically, it is desirable to configure the intermediate materials (120) with resins equal to the first heat-resistant resins(110) or resins having similar transmittance and heat resistance to the first heat-resistant resins(110). For example, if polyarylate-series resins are used when the first films are manufactured, it is also good to use polyarylate-series resins for the intermediate materials (120). It is to realize the best optical performance of a liquid crystal display device by laminating materials having the same refractive index as the first heat-resistant resins (110) that constitute the first films, on the first films.

It is desirable to apply the intermediate materials (120) in a minimum thickness that can stably combine the second films (200) on the first films, and more specifically, it is good to apply the intermediate materials(120) having 0.5∼5µm of thickness on the first films. If the intermediate materials (120) are applied in a thinner way than 0.5µm, it is not possible to obtain a sufficient adhesive force, causing a problem that the second films (200) are not stably laminated and combined on the first films.

Moreover, if the flexible substrate of the present invention is configured by applying the intermediate materials(120) having more than 5µm of thickness on the first films configured in 20∼90µm of thickness, reduction in coefficients of thermal expansion by the first films might be offset owing to high coefficients of thermal expansion of the intermediate materials(120) made of heat-resistant resins, thus it may deteriorate size stability of the substrate and induce transmittance deterioration of the substrate and a haze increase, resulting in degradation of optical properties of the flexible substrate.

Therefore, when the flexible substrate of the present invention is applied to a display panel(ex, organic EL) which does not have to consider the optical properties of the substrate, it is also possible to apply various film gluing agents or film adhesives since transmittance of the intermediate materials(120) does not have to be taken into account.

### (3) Step of previously manufacturing and laminating the second films

One of main technical features of the flexible substrate in accordance with the present invention is to laminate and combine the previously manufactured second films (200) with the first films to complement a problem of relatively coarse surface roughness, in the case of the first films having low coefficients of thermal expansion.

That is, unlike a method of forming another coating layer by applying liquid resins on first films and hardening the applied resins, in the present invention, solidified resin films having good surface roughness are previously manufactured and prepared, then the prepared solidified resin films are laminated and combined with the first films by using the intermediate materials(120).

The previously manufactured second films (200) are configured with second heat-resistant resins without double refraction, and as the second heat-resistant resins, any resin having excellent flatness, more than 85% of film transmittance, whose haze satisfies less than 4.6, and having more than 160°C of glass transition temperature can be used regardless of types.

In other words, unlike a film structure of a prior art that applies liquid resins on first films and hardens the applied resins, a method of laminating second films having good flatness formed through a separate process on the first films is employed. Hence, when the first films are combined with the second films (200) while the flexible substrate is manufactured according to the present invention, an impregnation process such as a process of impregnating the glass cloth (100) into the first heat-resistant resins (110) is not necessary. Therefore, when the second films (200) are selected, matching of refractive indexes with the first heat-resistant resins (110) or the glass cloth (100) does not have to be specially taken into account.

Hence, in the case of a refractive index of the second heat-resistant resins usable in the present invention, it does not matter even though a refractive index exceeding 0.03 and a refractive index of the first heat-resistant resins are generated.

Hence, in the case of a refractive index of the second heat-resistant resins usable in the present invention, it does not matter even though the difference between the refractive index of the second heat-resistant resins and the refractive index of the first heat-resistant resins exceeds 0.03. So, when the flexible substrate of the present invention is generated, the second heat-resistant resins are generally formed with materials different from the first heat-resistant resins, but it is also possible to form with the same materials when necessary. Accordingly, types of applicable resins can be diversified, thereby bringing an effect of reduction in a manufacturing cost.

Concretely, for the second heat-resistant resins as UV hardening or thermal hardening resins, it is desirable to use at least one resin selected from heat-resistant resins having more than 200°C of glass transition temperature such as polysulfone, polyether, polyether imide, and polyarylate (PAR). But, resins that constitute the second heat-resistant resins are not limited to these specified resins only.

The first films have a characteristic of improving thermal properties of the flexible substrate, but surface roughness thereof is not good since the glass cloth is impregnated inside the resins. The second films (200) are used to make surface roughness of the flexible substrate better by being laminated on the first films whose surface roughness is not good. However, if the second films (200) are configured in more than a suitable thickness, coefficients of thermal expansion by the second films (200) themselves get higher to offset reduction in thermal expansion by the first films, thereby deteriorating size stability of the flexible substrate. The second films (200) of the present invention should be in a thickness that can improve surface roughness as maximally maintaining reduction effect of thermal expansion by the first films.

Thus, the second films (200) are configured in a thinner way than the first films. To be concrete, if the first films are formed to have a 20∼90µm of thickness, it is desirable to configure the second films (200) to have a 10∼50µm of thickness.

In the aforementioned embodiment, it is suggested to laminate the second films (200) on the first films by using the intermediate materials (120), but it is also available to have a structure of directly laminating the second films (200) on the first films without using the intermediate materials(120). In this case, a boundary surface between the first films and the second films (200) is glued or adhered by being thermally hardened or UV-hardened.

From now on, another embodiment of the second films in accordance with the present invention will be described. Another embodiment of the second films (200) in accordance with the present invention is to more improve size stability of the flexible substrate through realization of low coefficients of thermal expansion by adding additives to the second heat-resistant resins. Namely, when the second films (200) of the present invention are previously manufactured, inorganic particle fillers are dispersed to the liquid second heat-resistant resins to enhance size stability and thermal properties of the second films (200).

As the inorganic particle fillers, it is desirable to use ultra fine ceramic powder whose refractive index is matched with the resins that constitute the flexible substrate. Specifically, it is good to use ceramic powder having a refractive index difference within ±0.01 with the resins that constitute the flexible substrate and having at least less than 200nm, desirably, less than 100nm of particle size.

When the flexible substrate in accordance with the present invention is applied to a display device having a property of transmitting light like a liquid crystal display device panel, light selectively transmitted by a liquid crystal arrives a user after passing through the second films (200). Therefore, in the case of the second films (200) that contain inorganic particle fillers, a refractive index difference between the inorganic particle fillers and the resins should be minimized to prevent deterioration of picture quality caused by a refractive index.

In addition, if particle size of the used inorganic particle fillers is larger than 200nm, light is dispersed on an interface with the resins owing to the particle size, resulting in an increase of haze. Thus, it is desirable to use inorganic particle fillers having at least less than 200nm of particle size.

The inorganic particle fillers should be made of inorganic materials having low coefficients of thermal expansion to lower the coefficients of thermal expansion of the second films (200), and more specifically, it is better to use ultra fine ceramic powder whose CTE is less than 8ppm.

If within a range that satisfies optical properties like haze and transmittance required by a display device, the content of the inorganic particle fillers dispersed in the second films (200) is not specially limited.

Like mentioned above, the second films (200) that contain the inorganic particle fillers offset high coefficients of thermal expansion that the second heat-resistant resins have, by using low coefficients of thermal expansion that the inorganic particle fillers have. Accordingly, the second films (200) containing the inorganic particle fillers can offer size stability of a more stable flexible substrate compared to the second films (200) consisting of the second heat-resistant resins only.

Furthermore, in the aforementioned preferred embodiment, the inorganic particle fillers are dispersed and contained in the second films (200) only, but it is also available to improve thermal properties of the first films by making the first films also contain the inorganic particle fillers.

It is necessary to perform an operation of laminating the second films (200) previously manufactured through the above process, on the first films where the intermediate materials(120) are applied. The solidified second films (200) are laminated on the first films where the intermediate materials(120) are applied, and the second films are exposed to UV rays or applied with heat, then the second films (200) are laminated and combined on the first films.

Moreover, metal chemicals can be additionally mixed with the first heat-resistant resins and the second heat-resistant resins which formulate the flexible substrate in accordance with the present invention, in order to obtain UV stability or thermal stability. Desirably, it can improve UV stability or heat resistance of the heat-resistant resins which constitute the flexible substrate of the present invention, by dispersing and containing titanium dioxide (TiO₂) particles in UV hardening resins or thermal hardening resins which formulate the first heat-resistant resins and the second heat-resistant resins.

Fig. 4 is a sectional view of a flexible substrate of another embodiment in accordance with the present invention. Referring to Fig. 4, the flexible substrate of another embodiment in accordance with the present invention is similar to the flexible substrate of the aforementioned embodiment in terms of a manufacturing process, thus only a difference between the two flexible substrates would be explained. In the embodiment suggested in Fig. 4, an intermediate material(120) is applied to one side only of first films, while a second film(200) is also laminated on the one side only, where the intermediate material(120) is applied. Though the flexible substrate of the embodiment suggested in Fig. 4 has a similar function to the flexible substrate of the aforementioned embodiment, it corresponds to a substrate structure which more considers thermal stability than contrast improvement in accordance with enhancement of surface roughness.

Table 1 shows actually measured data that measures each of thermal and optical properties and the embodiments of the flexible substrate in accordance with the present invention manufactured by using the aforementioned methods.

### [Table 1]

**Table 1**

| | Embodiment 1 | Embodiment 2 | Embodiment 3 | Embodiment 4 | Embodiment 5 | Embodiment 6 |
|---|---|---|---|---|---|---|
| First film thickness( µm) | 20 | 30 | 40 | 50 | 30 | 40 |
| Second film thickness( µm) | 20 | 30 | 40 | 10 | 20 | 20 |
| Haze | 2.7 | 5.2 | 6.5 | 3.8 | 3.2 | 4.1 |
| Coefficients of thermal expansion ppm/°C | 13 | 17 | 19 | 15 | 16 | 17 |
| Transmittance 550nm(% ) | 91 | 89 | 88 | 89 | 90 | 89 |
| Surface roughness(nm) | 25 | 14 | 12 | 17 | 22 | 19 |
| Retardation(nm) | 10 | 10 | 10 | 10 | 10 | 10 |

In the embodiments of Table 1, bisphenol A ethoxylate diacrylate UV hardening resins are used as the first heat-resistant resins, and for the second heat-resistant resins, thermal hardening resins, poly arylate resins having a chemical formula 1 and having around 320°C of transition temperature are used.

[Chemical Formula 1]

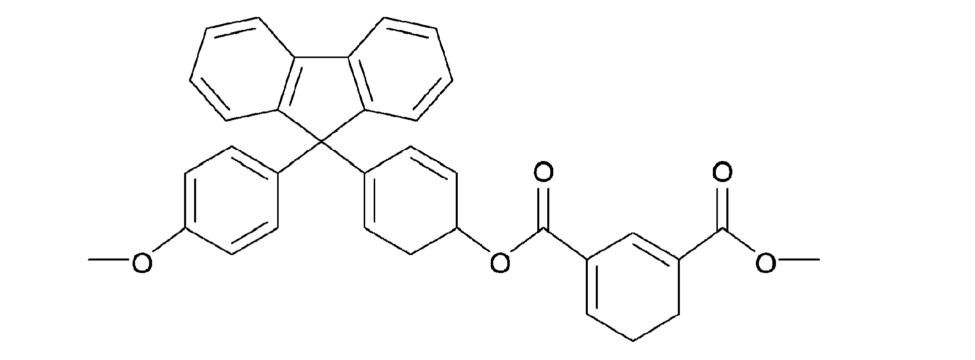

In the embodiments of Table 1, thickness of the first films is set to a range of 20 to 50µm, and thickness of the second films (200) is set to a range of 10 to 40µm, in consideration of 50∼100µm corresponding to a thickness for realizing the best flexible function of the display device. The 'Retardation' in the Table 1 means a phase difference between an incident light and an emitted light.

Like shown in Table 1, it is noted that the flexible substrate of the present invention for formulating a film complex through an organic combination between the first films and the second films can obtain more than 85% of transmittance and less than 20ppm/°C of coefficients of thermal expansion, and above all, that it is possible to obtain the flexible substrate for the display panel having an improved surface roughness up to 12nm.

Moreover, the flexible substrate in accordance with the present invention configures a film complex by laminating the previously manufactured solidified second films on the first films, thereby preventing curl generation caused by contraction and expansion of the substrate as realizing a very simple manufacturing process. As a result, scale-up can be easily accomplished and productivity is improved.

The flexible substrate in accordance with the present invention can ensure reduction in coefficients of thermal expansion through a simple manufacturing process, while obtaining improvement of surface roughness, thus it has a very high industrial applicability since it is beneficial to scale-up of the substrate.

## Claims

1. A flexible substrate for a display panel comprises a film complex structure, comprising: first films where a glass cloth (100) is impregnated inside first heat-resistant resins (110); and second films (200) laminated on at least one side of the first films, and consisting of second heat-resistant resins.

2. Flexible substrate according to claim 1, wherein between the first films and the second films(200), intermediate materials(120) for gluing or adhering the first films to the second films(200) are further comprised by being applied to an upper part of the first films.

3. Flexible substrate according to claim 2, wherein the intermediate materials (120) are composed of the first heat-resistant resins (110).

4. Flexible substrate according to one of claims 1 to 3, wherein thickness of the second films (200) is smaller than thickness of the first films.

5. Flexible substrate according to one of claims 1 to 3, wherein the first heat-resistant resins(110) or the second heat-resistant resins consist of at least one resin selected from polysulfone, polyether, polyether imide or (polyimide), and polyarylate (or polyacrylate) (PAR) having more than 200°C of glass transition temperature.

6. Flexible substrate according to claim 5, wherein the first heat-resistant resins (110) and the second heat-resistant resins are formed with the same materials.

7. Flexible substrate of one of claims 1 to 3, wherein the second films(200) satisfy more than 85% of transmittance (transmissivity), less than 4.6 of haze, and more than 160°C of glass transition temperature.

8. Flexible substrate of one of claims 1 to 3, wherein a refractive index difference between the glass cloth (100) and the first heat-resistant resins (110) which constitute the first films is within ±0.01.

9. Flexible substrate of one of claims 1 to 3, wherein the second films (200) contain ultra fine ceramic powder by dispersing the powder.

10. The flexible substrate of claim 9, wherein the ultra fine ceramic powder has a refractive index difference within ±0.01 with the second heat-resistant resins, and has less than 200nm of particle size and less than 8ppm/°C of coefficients of thermal expansion.

11. Flexible substrate of one of claims 1 to 3, wherein to improve UV stability of the first heat-resistant resins(110) or the second heat-resistant resins, titanium dioxide(TiO₂) particles are dispersed and contained inside the first heat-resistant resins(110) or the second heat-resistant resins.

12. Flexible substrate of one of claims 1 to 3, wherein the flexible substrate for the display panel is in a total thickness of 30∼200µm.

13. Flexible substrate of claim 2 or 3, wherein the intermediate materials (120) are applied in a thickness of 0.5µm∼5µm.

14. Method for manufacturing a flexible substrate for a display panel, comprising the steps of: a first step of manufacturing a glass cloth(100) by configuring glass fibre in fabric type, and manufacturing first films by impregnating the glass cloth(100) into first heat-resistant resins(110); and a second step of previously manufacturing second films(200) configured by hardening second heat-resistant resins, and laminating and combining the previously manufactured second films(200) on an upper part of at least one side of the first films.

15. Method for manufacturing a flexible substrate according to claim 14, wherein between the first step and the second step, a third step of applying intermediate materials (120) for gluing or adhering the first films and the second films (200) to an upper part of the first films is further comprised.

16. Method for manufacturing a flexible substrate according to claim 15, wherein the second films (200) are laminated on the first films by UV hardening or thermally hardening the intermediate materials(120).

17. Method for manufacturing a flexible substrate according to claim 14, wherein in the previous manufacturing step of the second films(200), a step of containing ultra fine ceramic powder inside the second heat-resistant resins which constitute the second films(200) is further comprised.
